# EUROPÄISCHE PATENTSCHRIFT

(11) **EP 4 029 129 B1**
(45) Veröffentlichungstag und Bekanntmachung des Hinweises auf die Patenterteilung: **25.02.2026**
(21) Anmeldenummer: 20739848.8
(22) Anmeldetag: 02.07.2020
(51) Int. Cl.: H02K 11/25, G01K 1/14

(54) **SENSORBEFESTIGUNG ZUR TEMPERATURMESSUNG IN EINER ELEKTRISCHEN MASCHINE EINES KRAFTFAHRZEUGS**
SENSOR FASTENING DEVICE FOR TEMPERATURE MEASUREMENT IN AN ELECTRICAL MACHINE OF A MOTOR VEHICLE
DISPOSITIF DE FIXATION DE CAPTEUR DESTINÉ À LA MESURE DE TEMPÉRATURE DANS UNE MACHINE ÉLECTRIQUE D'UN VÉHICULE À MOTEUR

(30) Priorität: 09.09.2019 DE 102019124097
(43) Veröffentlichungstag der Anmeldung: 20.07.2022
(73) Patentinhaber: Schaeffler Technologies AG & Co. KG, 91074 Herzogenaurach (DE)
(72) Erfinder: SILVERY, Christian, 75045 Walzbachtal (DE); KÄSTLE, Matthias, 77886 Lauf (DE); ANKE, Marie-Luise, 76137 Karlsruhe (DE)
(74) Vertreter: Schaeffler Technologies
(86) Internationale Anmeldenummer: PCT/DE2020/100583
(87) Internationale Veröffentlichungsnummer: WO 2021/047711

(56) Entgegenhaltungen:
- DE-A1- 102016 209 459
- DE-A1- 102016 211 536
- DE-A1- 102018 206 985
- JP-A- 2004 297 958
- JP-B2- 3 699 025

## Beschreibung

Die Erfindung betrifft eine Sensorbefestigung, mit deren Hilfe ein Temperatursensor in einer elektrischen Maschine eines Kraftfahrzeugs befestigt werden kann, um eine in der elektrischen Maschine auftretende Temperatur zu messen.

Temperatursensoren werden in elektrischen Maschinen eingesetzt, um beispielsweise die Temperatur einzelner Komponenten zu überwachen. Insbesondere bei elektrischen Maschinen zum Antrieb eines Kraftfahrzeugs sind Temperaturen von Stator- und Rotorkomponenten zu überwachen. Bei elektrischen Maschinen mit verteilter Wicklung, aber auch bei Maschinen mit Einzelzahnwicklungen, sind die Temperatursensoren meist innerhalb des Stators verbaut, wo sie jedoch zu Wartungszwecken von außerhalb nicht mehr zugänglich sind. Für elektrischen Maschinen, insbesondere für elektrische Hybridfahrzeuge sowie für Elektrofahrzeuge oder für Radnabenantriebe, sind verschiedene Wicklungstechnologien für den Stator der elektrischen Maschinen bekannt. Für eine besonders dichte bzw. kompakte Wicklung werden beispielsweise Wicklungstechnologien wie die sogenannte Hairpin- oder Stab-Wellenwicklung verwendet. Eine Temperaturerfassung gestaltet sich bei derartigen Wicklungen schwierig, da diese sehr eng gewickelt oder bestückt sind, sodass kein Temperatursensor zwischen die Drähte der jeweiligen Wicklung gesteckt werden kann, um die Temperatur der Wicklung zu messen. Die Temperatur der Wicklung wird in diesem Fall an der radialen Außenseite gemessen, wo jedoch geringere Temperaturen als am radial inneren Rand der Wicklung auftreten, so dass eine zu geringe Maximaltemperatur der Wicklung gemessen wird.

Eine Sensorbefestigung gemäß dem Oberbegriff des Anspruch 1 ist in der Druckschrift DE 10 2018 206985 A1 offenbart. Für weiteren Stand der Technik sei auf die Schriften JP 2004 297958 A sowie JP 3 699025 B2 verwiesen.

Es ist die Aufgabe der Erfindung Maßnahmen aufzuzeigen, die eine wartungsfreundliche und genaue Messung einer Maximaltemperatur in einer Wicklung einer elektrischen Maschine für ein Kraftfahrzeug ermöglichen.

Die Lösung der Aufgabe erfolgt erfindungsgemäß durch eine Sensorbefestigung mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist eine Sensorbefestigung zur Temperaturmessung in einer elektrischen Maschine zum Antrieb eines Kraftfahrzeugs vorgesehen mit einem Haltekörper zur Aufnahme eines Temperatursensors, einem Abstützkörper zur Anlage an einem Statorblech der elektrischen Maschine, wobei der Abstützkörper mit dem Haltekörper aufspreizbar, insbesondere im Wesentlichen gelenkig, verbunden ist, und einem Spreitzmittel zum Wegspreizen des Haltekörpers von dem Abstützkörper. Weiter sind der Haltekörper und der Abstützkörper über einen Mittelsteg miteinander verbunden, wobei der Mittelsteg eine Öffnung zum Einführen des Spreitzmittels aufweist.

Mit Hilfe der Sensorbefestigung kann der Temperatursensor in axialer Richtung an der zu überwachenden Wicklung vorbei geführt werden, so dass es möglich ist die Sensorbefestigung von radial außen her in die elektrische Maschine einzustecken und den Temperatursensor von radial außen her zu Wartungszwecken wieder herauszuziehen, ohne dass die Wicklung eine radiale Relativbewegung des Temperatursensors blockieren kann. Ein Anschlagen des Temperatursensors an der Wicklung in radialer Richtung kann vermieden werden. Nach der Positionierung der Sensorbefestigung in der beabsichtigten Endlage relativ zu der Wicklung der elektrischen Maschine kann das Spreizmittel in einen zwischen dem Haltekörper und dem Abstützkörper ausgebildeten Aufnahmespalt eingesteckt werden, wodurch der Haltekörper von dem Abstützkörper weg aufgespreizt werden kann. Hierzu kann beispielsweise das Spreizmittel an einer schiefen Ebene abgleiten, wodurch sich die Erstreckung des zwischen dem Spreizmittel und dem Abstützkörper und/oder dem Haltekörper erhöht. Besonders bevorzugt ist das Spreizmittel zwischen dem Haltekörper und dem Abstützkörper selbsthemmend aufgenommen, beispielsweise verkeilt. Durch das Aufspreizen der Sensorbefestigung kann der Haltekörper zusammen mit dem Temperatursensor in axialer Richtung der elektrischen Maschine vorgespannt werden. Hierzu kann sich der Abstützkörper über den Temperatursensor an der Wicklung und der Abstützkörper an einem axial neben der Wicklung in einer Radialebene verlaufenden Oberseite eines Statorblechs des Stators der elektrischen Maschine abstützen. Das Spreizmittel kann dadurch den Haltekörper zusammen mit dem Temperatursensor von dem Statorblech weg auf die Wicklung zu drücken. Vor dem vollständigen Einsetzen des Spreizmittels weist die Sensorbefestigung in axialer Richtung der elektrischen Maschine eine so geringe Erstreckung auf, dass die Sensorbefestigung zusammen mit dem Temperatursensor leicht von radial außen her axial an der Wicklung vorbei bewegt werden kann. Wenn die gewünschte radiale Relativlage zur Wicklung erreicht ist, kann das Spreizelement soweit eingesteckt werden, dass die aufgespreizte Sensorbefestigung den Temperatursensor an die Wicklung mit einer Federkraft anpressen kann. Hierbei kann der Temperatursensor insbesondere an den radial inneren Rand der Wicklung angepresst werden, wo die höchsten Temperaturen zu erwarten sind. Zwischen dem axialen Rand der Wicklung, an dem der Temperatursensor angepresst ist und einem in axialer Richtung mittigen inneren Drahtbereich der Wicklung liegt ein im Wesentlichen nur durch Wärmeleitung dominierter Wärmetransport vor, der entweder bei der Temperaturmessung in einer mit dem Temperatursensor verbundenen Überwachungseinheit rechnerisch berücksichtigt werden kann oder sogar vernachlässig werden kann. Hierbei kann die Erkenntnis ausgenutzt werden, dass die Sensorbefestigung in der Regel aus einem elektrisch isolierenden Kunststoffmaterial hergestellt ist, das durch die von dem Spreizmittel aufgebrachte Kraft in axialer Richtung der elektrischen Maschine etwas elastisch gebogen werden kann, um eine thermische Kontaktierung des Temperatursensors mit dem radial inneren Rand der Wicklung sicherzustellen. Durch die in radialer Richtung verlagerbaren und axial an der Wicklung vorbeibewegbaren Sensorbefestigung kann der Temperatursensor von radial außen her am radial inneren Rand der Wicklung positioniert und mit Hilfe des Spreizmittels thermisch angekoppelt werden, so dass eine wartungsfreundliche und genaue Messung einer Maximaltemperatur in einer Wicklung einer elektrischen Maschine für ein Kraftfahrzeug ermöglicht ist. Der insbesondere in der Montagelage nach radial außen weisende Mittelsteg kann über die Öffnung das Spreizmittel aufnehmen und das Spreizmittel in den zwischen dem Haltekörper und den Abstützkörper ausgebildeten Aufnahmespalt hineinlassen. Dadurch kann das Spreizmittel beabstandet zu dem Mittelsteg die Sensorbefestigung aufspreizen, so dass insbesondere der Temperatursensor an den radial inneren Rand der Wicklung angepresst werden kann. Vorzugsweise weist das Spreizmittel einen Kragen auf, der an dem die Öffnung des Mittelstegs ausbildenden Material des Mittelstegs anschlagen kann, um die Einstecktiefe des Spreizmittels zu begrenzen. Ein zu starkes Aufspreizen der Sensorbefestigung, bei welcher der Mittelsteg plastisch verformt und/oder beschädigt werden könnte, ist dadurch vermieden.

Die elektrische Maschine ist insbesondere ausgelegt im Motorbetrieb zum Antrieb des Kraftfahrzeugs eine Antriebsleistung in einen Antriebsstrang des Kraftfahrzeugs einzuleiten oder als Teil eines Radnabenantriebs ein einzelnes Rad des Kraftfahrzeugs anzutreiben. In einem Generatorbetrieb der elektrischen Maschine können an der elektrischen Maschine angreifende Schleppmomente genutzt werden, um elektrischen Energie zu erzeugen. Die elektrische Maschine weist einen feststehenden Stator und einen relativ zu dem Stator drehenden Rotor auf. Der Rotor kann Dauermagneten aufweisen, die mit Elektromagneten des Stators elektromagnetisch zusammenwirken können, um im Motorbetrieb und/oder Generatorbetrieb ein Drehmoment auszutauschen. Der Stator kann mindestens ein Statorblech aufweisen, das die Wicklung des Staors an einer axialen Seite überdeckt. Die Wicklung kann über Isolationselemente gegenüber dem Statorblech elektrisch isoliert sein. Die Sensorbefestigung kann insbesondere in einem zwischen dem Statorblech und der Wicklung ausgebildeten Zwischenraum in einer die Isolationselemente enthaltenen Isolationsschicht eingesteckt sein. Die Wicklung beruht insbesondere auf einer Spulenwickeltechnik, die eine hohe Leistungsdichte und eine hohe Energieeffizienz ermöglichen. Vorzugsweise beruht die Wicklung auf einer Hairpin- oder Stab-Wellenwicklung. Bei der Stab-Wellenwicklung kann die, insbesondere verteilte, Wicklung in einer Art Flechtverfahren erstellt und anschließend in die Stator-Nuten gefügt werden. Dadurch kann mit geringeren Querschnitten gearbeitet werden, die mögliche Nutanzahl erhöht werden und/oder der Effekt der Stromverdrängungsverluste gemindert werden. Eine endgültige Montagelage der Sensorbefestigung entspricht insbesondere einer Relativlage der Sensorbefestigung innerhalb der elektrischen Maschine, in welche die Sensorbefestigung zusammen mit dem Temperatursensor verbaut werden soll, in welcher der Temperatursensor im Wesentlichen in radialer Richtung der elektrischen Maschine ausgerichtet ist und in seiner designierten Endlage an der Wicklung, insbesondere an dem radial inneren Rand der Wicklung, anliegt.

Insbesondere sind der Haltekörper und der Abstützkörper einstückig aus einem verbiegbaren Kunststoffmaterial hergestellt. Für das gelenkige Aufspreizen der Sensorbefestigung kann allein die Elastizität des Kunststoffmaterial ausgenutzt werden. Dadurch ist es nicht erforderlich den Haltekörper und den Abstützkörper als separate Bauteile auszugestalten, die bei der Herstellung erst noch gelenkig und/oder schwenkbar miteinander verbunden werden müssen. Die Ausbildung eines Gelenks oder Scharniers kann dadurch eingespart werden. Stattdessen kann die Sensorbefestigung kostengünstig durch Kunststoffspritzguss hergestellt sein. Der Haltekörper und der Abstützkörper können über eine den zwischen dem Haltekörper und dem Abstützkörper ausgebildeten Aufnahmespalt für das Spreizmittel überbrückende als Verbindungswand dienenden Mittelsteg miteinander einstückig verbunden sein, wobei die Wandstärke des Mittelstegs insbesondere derart bemessen ist, dass ein elastisches Verbiegen des Mittelsteg über die zu erwartende Spreizung der Sensorbefestigung zugelassen ist ohne zu brechen oder bleibend plastisch verformt zu werden.

Besonders bevorzugt ist zwischen dem Haltekörper und dem Abstützkörper der Aufnahmespalt zur Aufnahme des Spreitzmittels ausgebildet, wobei insbesondere der Aufnahmespalt zumindest in einem Teilbereich im Wesentlichen konisch ausgebildet ist. Wenn das, vorzugsweise ebenfalls konisch ausgebildete, Spreitzmittel in den sich verjüngenden Teil des konischen Aufnahmespalts ankommt, kann automatisch das Aufspreizen der Sensorbefestigung erfolgen, indem das Spreizmittel an der durch die konische Ausgestaltung des Aufnahmespalts ausgebildeten schiefen Ebene, insbesondere mit einer korrespondierend angeschrägten schiefen Ebene, abgleitet und die Sensorbefestigung aufweitet.

Insbesondere ist das Spreizmittel als zwischen den Haltekörper und den Abstützkörper einsteckbarer Steckdübel ausgestaltet, wobei insbesondere der Steckdübel durch ein Einschrauben einer Dübelschraube wegspreizbare Widerhaken aufweist. Das Spreizmittel kann dadurch bereits konische Teilbereiche aufweisen, die von Anfang an vorliegen und/oder durch das Einschrauben der Dübelschraube erst erzeugt und/oder verstärkt werden. Das Spreizmittel kann sich vergleichbar zu einem Spreizdübel mit Hilfe der Dübelschraube selber aufspreizen und dadurch das Aufspreizen der Sensorbefestigung bewirken. Dadurch ist es insbesondere möglich das Spreizmittel vormontiert in den Aufnahmespalt einzusetzen, wobei das Spreizmittel in dem Aufnahmespalt reibschlüssig festgehalten sein kann. Das eigentliche Aufspreizen beginnt in diesem Fall erst dann, wenn die vorzugsweise teilweise eingeschraubt vormontierte Dübelschraube angezogen wird.

Vorzugsweise sind zwischen dem Haltekörper und dem Abstützkörper Haltevertiefungen zur formschlüssigen Aufnahme von wegspreizbaren Widerhaken des Spreitzmittels ausgebildet und/oder durch ein Anpressen der Widerhaken erzeugbar. Die Widerhaken des Spreizmittels können formschlüssig und verliersicher von der jeweils zugeordneten Haltevertiefung zurückgehalten werden, so dass ein unbeabsichtigtes Lösen des Spreizmittels sicher vermieden sein kann.

Besonders bevorzugt weist der Abstützkörper mindestens einen Begrenzungsanschlag zum radialen Anschlagen an einem zwischen einer Wicklung und einem Statorblech vorgesehenen Isolationselement und/oder mindestens einen Halteclip zum radialen Hintergreifen des Isolationselements auf. Insbesondere ist die Sensorbefestigung zwischen zwei im Wesentlichen radial verlaufenden und in Umfangsrichtung beabstandet zueinander positionierten Isolationselementen vorgesehen, so dass an beiden Isolationselementen jeweils ein Begrenzungsanschlag anschlagen kann und/oder beide Isolationselemente von jeweils einem Halteclip umgriffen werden kann. Die radiale Relativlage der Sensorbefestigung relativ zu der Wicklung kann dadurch leicht vorgegeben werden, ohne dass eine Befestigungstechnik am radial äußeren Rand des Statorblechs vorgesehen sein muss. Insbesondere ist das jeweilige Isolationselement zwischen dem Begrenzungsanschlag und dem Halteclip mit möglichst wenig Spiel aufgenommen, so dass das Temperaturelement mit ausreichender Genauigkeit an der designierten Messposition der Wicklung angepresst werden kann.

Insbesondere weist das Spreizmittel einen abstehenden Demontagearm zum Herausziehen des Spreizmittels aus dem zwischen dem zwischen dem Haltekörper und dem Abstützkörper ausgebildeten Aufnahmespalt auf. Der von der Längsrichtung des Spreizmittels außerhalb des Aufnahmespalts im Wesentlichen quer abstehende Demontagearm kann beispielsweise zwischen Daumen und Zeigefinger festgehalten werden, um das Spreizmittel herauszuziehen, gegebenenfalls nachdem eine Dübelschraube gelöst wurde. Das Aufspreizen der Sensorbefestigung kann dadurch rückgängig gemacht werden, so dass der Temperatursensor nicht mehr an der Wicklung angepresst ist. In diesem Zustand kann der Temperatursensor leicht in radialer Richtung der elektrischen Maschine aus dem Haltekörper herausgezogen werden, beispielsweise um mit geringem Wartungsaufwand einen defekten Temperatursensor austauschen zu können.

Vorzugsweise weist der Haltekörper einen Aufnahmeschacht zum Einstecken des Temperatursensors durch eine Relativbewegung in radialer Richtung der elektrischen Maschine auf. Mit Hilfe des Aufnahmeschachts kann der Temperatursensor leicht in die Sensorbefestigung eingesteckt werden, wobei der Aufnahmeschacht insbesondere eine Relativbewegung des Temperatursensors relativ zur Sensorbefestigung in axialer und tangentialer Richtung der elektrischen Maschine blockieren kann. Besonders bevorzugt weist der Aufnahmeschacht eine Haltetasche zur Aufnahme eines freien Endes des Temperatursensors auf, wobei insbesondere die Haltetasche eine Relativbewegung des Temperatursensors zum Haltekörper in axialer und/oder tangentialer Richtung der elektrischen Maschine blockiert. Insbesondere ist das freien Ende des Temperatursensors in der Haltetasche verkeilt. Ein Spiel des Temperatursensors in dem Aufnahmeschacht kann dadurch minimiert werden. Das in der Haltetasche eingesteckte freie Ende des Temperatursensors kann ein Heraushebeln des Temperatursensors aus dem Aufnahmeschacht auch unter Last sicher verhindern.

Die Erfindung betrifft ferner eine Statoranordnung für eine elektrische Maschine mit mindestens einem Statorblech, einer Wicklung zur Ausbildung eines Elektromagneten, zwischen dem Statorblech und der Wicklung vorgesehene und in Umfangsrichtung zueinander beabstandet angeordnete Isolationselemente zur elektrischen Isolierung der Wicklung gegenüber dem Statorblech und eine zwischen dem Statorblech und der Wicklung verklemmten Sensorbefestigung, die wie vorstehend beschrieben aus- und weitergebildet sein kann, wobei der in dem Haltekörper aufgenommene Temperatursensor zwischen zwei in Umfangsrichtung nachfolgenden Isolationselementen im Wesentlichen radial verläuft und von dem Spreizmittel gegen die Wicklung, insbesondere einem radial inneren Rand der Wicklung, thermisch leitend angepresst ist. Durch die in radialer Richtung verlagerbaren und axial an der Wicklung vorbeibewegbaren Sensorbefestigung kann der Temperatursensor von radial außen her am radial inneren Rand der Wicklung positioniert und mit Hilfe des Spreizmittels thermisch angekoppelt werden, so dass eine wartungsfreundliche und genaue Messung einer Maximaltemperatur in einer Wicklung einer elektrischen Maschine für ein Kraftfahrzeug ermöglicht ist.

Besonders bevorzugt ist die Sensorbefestigung formschlüssig mit mindestens einem Isolationselement, insbesondere in radialer Richtung der elektrischen Maschine verliersicher, befestig. Die radiale Relativlage der Sensorbefestigung relativ zu der Wicklung kann dadurch leicht vorgegeben werden, ohne dass eine Befestigungstechnik am radial äußeren Rand des Statorblechs vorgesehen sein muss. Insbesondere greift das jeweilige Isolationselement mit möglichst wenig Spiel in radialer Richtung in die Sensorbefestigung ein, so dass das Temperaturelement mit ausreichender Genauigkeit an der designierten Messposition der Wicklung angepresst werden kann. Wenn die Aufspreizung der Sensorbefestigung rückgängig gemacht ist, kann der Temperatursensor leicht in radialer Richtung der elektrischen Maschine aus dem Haltekörper herausgezogen werden, beispielsweise um mit geringem Wartungsaufwand einen defekten Temperatursensor austauschen zu können.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Vorderansicht einer Sensorbefestigung,
Fig. 2: eine schematische perspektivische Rückansicht der Sensorbefestigung aus Fig. 1,
Fig. 3: eine schematische Schnittansicht der Sensorbefestigung aus Fig. 1,
Fig. 4: eine schematische perspektivische Rückansicht der Sensorbefestigung aus

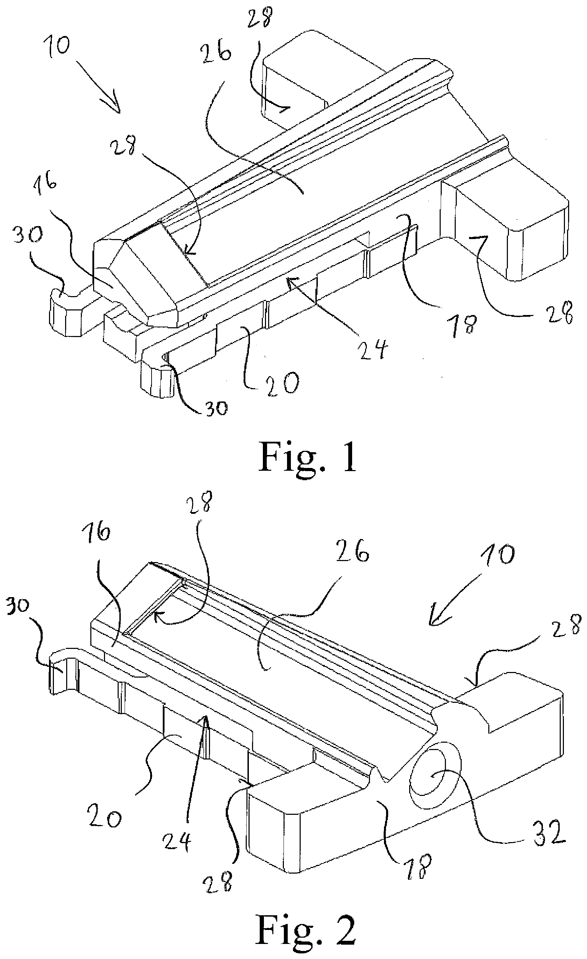

Fig. 2 vor einer Montage,

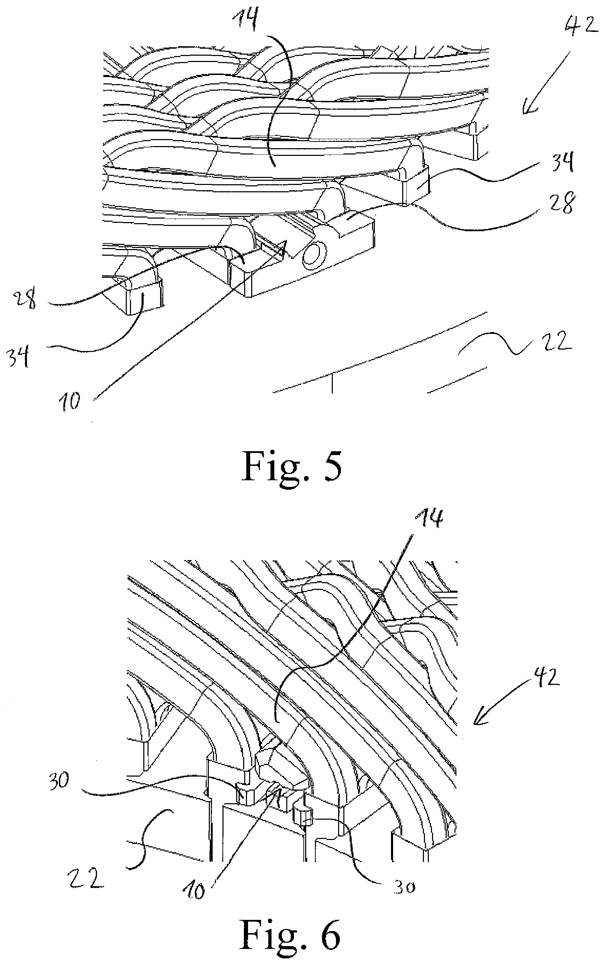

Fig. 5: eine schematische perspektivische Rückansicht der Sensorbefestigung aus

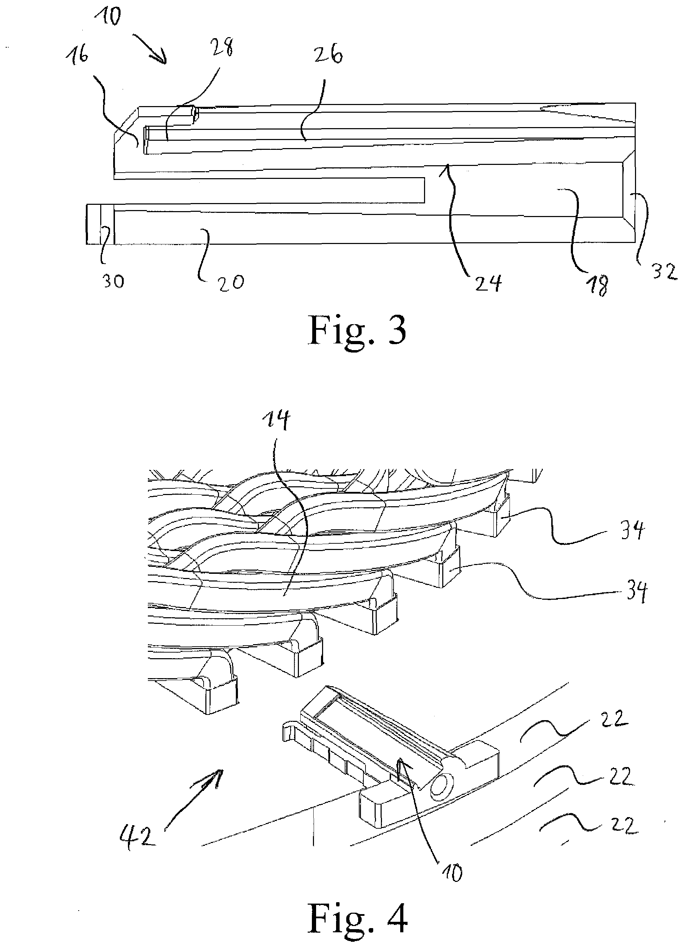

Fig. 4 nach einer Montage,
Fig. 6: eine schematische perspektivische Vorderansicht der Sensorbefestigung aus Fig. 1 nach einer Montage,

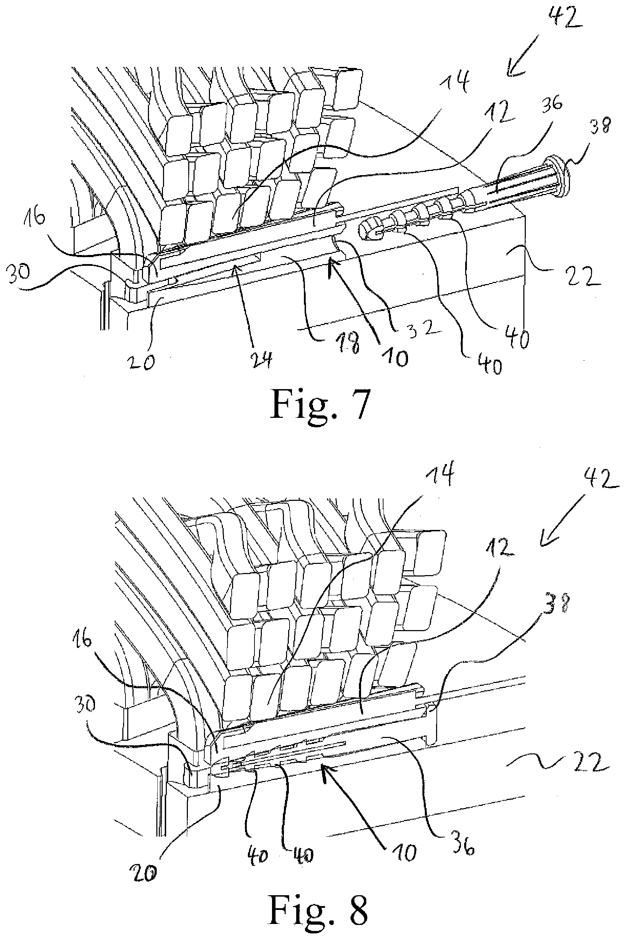

Fig. 7: eine schematische perspektivische Schnittansicht der Sensorbefestigung aus
Fig. 5 und Fig. 6 vor dem Einsetzen eines Spreizmittels und
Fig. 8: eine schematische perspektivische Schnittansicht der Sensorbefestigung aus
Fig. 7 nach dem Einsetzen des Spreizmittels.

Die in Fig. 1 und Fig. 2 dargestellte Sensorbefestigung 10 kann zur Befestigung eines, insbesondere als NTC- oder PTC-Widerstandselement ausgestalteten, Temperatursensors 12 in einer zum Antrieb eines Kraftfahrzeugs vorgesehenen elektrischen Maschine verwendet werden, um die Temperatur einer Wicklung 14 von Elektromagneten eines Stators der elektrischen Maschine überwachen zu können. Die Sensorbefestigung 10 weist einen Haltekörper 16 und einen über einen Mittelsteg 18 einstückig verbundenen Abstützkörper 20 auf. Der Abstützkörper 20 kann flächig auf einem Statorblech 20 eines Stators der elektrischen Maschine aufliegen. Der Haltekörper 16 ist in axialer Richtung über einen Aufnahmespalt 24 getrennt oberhalb des Abstützkörpers 20 ausgebildet. Der Haltekörper 18 bildet einen Aufnahmeschacht 26 aus, in den der Temperatursensor 12 in Längsrichtung eingeschoben werden kann und der gleichzeitig eine Relativbewegung des Temperatursensors 12 quer zur Längsrichtung formschlüssig blockiert. Wenn die Sensorbefestigung 10 mit ihrer Längsrichtung in radialer Richtung der elektrischen Maschine ausgerichtet ist, ist eine Relativbewegung des Temperatursensors 12 in tangentialer und axialer Richtung der elektrischen Maschine blockiert. Ein nach radial innen weisendes freies Ende des Temperatursensors 12 kann in eine am Ende des Aufnahmeschachts 26 ausgebildeten Haltetasche 28 eingesteckt, vorzugsweise verkeilt, werden. Im Bereich des Mittelstegs 18 stehen von dem Abstützköper 20 Begrenzungsanschläge 28 ab. An dem von dem Mittelsteg 18 weg weisenden Ende des Abstützköpers 20 stehen Halteclips 30 ab.

Wie in Fig. 3 dargestellt, ist in dem Mittelsteg 18 eine Öffnung 32 vorgesehen, die mit dem Aufnahmespalt 24 kommuniziert. Der Aufnahmespalt 24 ist im Wesentlichen konisch ausgeführt und verjüngt sich entlang seiner von dem Mittelsteg 18 weg verlaufenden Längsrichtung.

Wie in Fig. 4 dargestellt, kann die Sensorbefestigung 10 bei der Montage in einer elektrischen Maschine im Wesentlichen radial ausgerichtet sein und entlang einer Oberfläche des Statorblechs 22 in einen Zwischenraum zwischen zwei in Umfangsrichtung nachfolgenden im Wesentlichen radial ausgerichteten Isolationselementen 34 eingeschoben werden. Die Einstecktiefe der Sensorbefestigung 10 kann durch die radial an den Isolationselementen 34 anschlagenden Begrenzungsanschläge 28 begrenzt werden, wie in Fig. 5 dargestellt. Gleichzeitig ist die Sensorbefestigung 10 an dem radial inneren Ende der Isolationselemente 34 mit den Isolationselementen 34 über die Halteclips 30 verclippst, wie in Fig. 6 dargestellt. Nachfolgend kann der Temperatursensor 12 in die Sensorbefestigung 10 eingesteckt werden, falls der Temperatursensor 12 während des Verclippsens der Sensorbefestigung 10 nicht bereits in der Sensorbefestigung 10 vormontiert war.

Wie in Fig. 7 dargestellt, kann ein als aufspreizbarer Steckdübel ausgestaltetes Spreizmittel 36 über die Öffnung 32 des Mittelstegs 18 in den Aufnahmespalt 24 eingesteckt werden, bis ein abstehender Kragen 38 des Spreizmittels 36 an dem Mittelsteg 18 anschlägt und die Einstecktiefe des Spreizmittels 36 begrenzt. Vorzugsweise ist das Spreizmittel in dem Aufnahmespalt verkeilt und/oder über in hinterschnittene Haltevertiefungen des Aufnahmespalt 24 eingreifende Widerhaken 40 des Spreizmittels 36 verliersicher aufgenommen, wie in Fig. 8 dargestellt. Hierbei ist es grundsätzlich möglich, dass das in den Aufnahmespalt 24 eingesteckte Spreizmittel 36 den Haltekörper der Sensorbefestigung 10 von dem Abstützkörper 20 soweit weggebogen hat, dass der Temperatursensor 12 im aufgespreizten Zustand der Sensorbefestigung 10 den Temperatursensor 12 an die Wicklung 14 andrückt. Dadurch ergibt sich eine thermische Anbindung zwischen dem Temperatursensor 12 und der Wicklung 14, die nicht durch eine dazwischenliegende thermisch isolierende Zwischenschicht beeinträchtigt wird. Falls dies noch nicht der Fall sein sollte und/oder die Anpresskraft des Temperatursensors 12, insbesondere an dem radial inneren Rand der Wicklung 14, erhöht werden soll, kann in das als Dübel ausgestaltete Spreizmittel 36 eine Dübelschraube eingeschraubt werden, die das Spreizmittel 36 und dadurch auch die Sensorbefestigung 10 weiter aufspreizt. Gleichzeitig wird die Sensorbefestigung 10 dadurch zwischen dem Statorblech 22 und der Wicklung 14 verkeilt. Zudem ist der Temperatursensor 12 in dem Zwischenraum zwischen den Isolationselementen und zwischen der Wicklung 14 und dem Statorblech 22 vor anderen Medien geschützt, so dass beispielsweise eine Beeinträchtigung der Temperaturmessung durch einen erzwungenen konvektiven Wärmeabtransport vermieden ist. Der aus der Wicklung 14, den Isolationselementen 34 und den Statorblechen 22 zusammengesetzte Stator der elektrischen Maschine bildet zusammen mit der Sensorbefestigung 10 und dem Temperatursensor 12 eine Statoranordnung 42 aus, die als eine gemeinsame Baueinheit mit einem nicht dargestellten Rotor der elektrischen Maschine zusammenwirken kann. Hierbei kann sehr leicht der Temperatursensor 12 zu Wartungszwecken demontiert werden, beispielsweise um einen defekten Temperatursensor 12 auszutauschen.

### Bezugszeichenliste

- 10: Sensorbefestigung
- 12: Temperatursensor
- 14: Wicklung
- 16: Haltekörper
- 18: Mittelsteg
- 20: Abstützkörper
- 22: Statorblech
- 24: Aufnahmespalt
- 26: Aufnahmeschacht
- 28: Begrenzungsanschlag
- 30: Halteclip
- 32: Öffnung
- 34: Isolationselemente
- 36: Spreizmittel
- 38: Kragen
- 40: Widerhaken
- 42: Statoranordnung

## Patentansprüche

1. Sensorbefestigung zur Temperaturmessung in einer elektrischen Maschine zum Antrieb eines Kraftfahrzeugs, mit
einem Haltekörper (16) zur Aufnahme eines Temperatursensors (12),
einem Abstützkörper (20) zur Anlage an einem Statorblech (22) der elektrischen Maschine,
wobei der Abstützkörper (20) mit dem Haltekörper (16) aufspreizbar, insbesondere im Wesentlichen gelenkig, verbunden ist, und
einem Spreitzmittel (36) zum Wegspreizen des Haltekörpers (16) von dem Abstützkörper (20)
**dadurch gekennzeichnet, dass**
der Haltekörper (16) und der Abstützkörper (20) über einen Mittelsteg (18) miteinander verbunden sind, wobei der Mittelsteg (18) eine Öffnung (32) zum Einführen des Spreitzmittels (36) aufweist.

2. Sensorbefestigung nach Anspruch 1 wobei der Haltekörper (16) und der Abstützkörper (20) einstückig aus einem verbiegbaren Kunststoffmaterial hergestellt sind.

3. Sensorbefestigung nach Anspruch 1 oder 2 wobei zwischen dem Haltekörper (16) und dem Abstützkörper (20) ein Aufnahmespalt (24) zur Aufnahme des Spreitzmittels (36) ausgebildet ist, wobei insbesondere der Aufnahmespalt (24) zumindest in einem Teilbereich im Wesentlichen konisch ausgebildet ist.

4. Sensorbefestigung nach einem der Ansprüche 1 bis 3 wobei das Spreizmittel (36) als zwischen den Haltekörper (16) und den Abstützkörper (20) einsteckbarer Steckdübel ausgestaltet ist, wobei insbesondere der Steckdübel durch ein Einschrauben einer Dübelschraube wegspreizbare Widerhaken (40) aufweist.

5. Sensorbefestigung nach einem der Ansprüche 1 bis 4 wobei zwischen dem Haltekörper (16) und dem Abstützkörper (20) Haltevertiefungen zur formschlüssigen Aufnahme von wegspreizbaren Widerhaken (40) des Spreitzmittels (36) ausgebildet und/oder durch ein Anpressen der Widerhaken (40) erzeugbar sind.

6. Sensorbefestigung nach einem der Ansprüche 1 bis 5 wobei der Abstützkörper (20) mindestens einen Begrenzungsanschlag (28) zum radialen Anschlagen an einem zwischen einer Wicklung (14) und einem Statorblech (22) vorgesehenen Isolationselement (34) und/oder mindestens einen Halteclip (30) zum radialen Hintergreifen des Isolationselements (34) aufweist.

7. Sensorbefestigung nach einem der Ansprüche 1 bis 6 wobei das Spreizmittel (36) einen abstehenden Demontagearm zum Herausziehen des Spreizmittels (36) aus dem zwischen dem Haltekörper (16) und dem Abstützkörper (20) ausgebildeten Aufnahmespalt (24) aufweist.

8. Statoranordnung für eine elektrische Maschine mit mindestens einem Statorblech (22), einer Wicklung (14) zur Ausbildung eines Elektromagneten, zwischen dem Statorblech (22) und der Wicklung (14) vorgesehene und in Umfangsrichtung zueinander beabstandet angeordnete Isolationselemente (34) zur elektrischen Isolierung der Wicklung (14) gegenüber dem Statorblech (22) und eine zwischen dem Statorblech (22) und der Wicklung(14) verklemmten Sensorbefestigung (10) nach einem der Ansprüche 1 bis 7, wobei der in dem Haltekörper (16) aufgenommene Temperatursensor (12) zwischen zwei in Umfangsrichtung nachfolgenden Isolationselementen (34) im Wesentlichen radial verläuft und von dem Spreizmittel (36) gegen die Wicklung (14), insbesondere einem radial inneren Rand der Wicklung (14), thermisch leitend angepresst ist.

9. Statoranordnung nach Anspruch 8 wobei die Sensorbefestigung (10) formschlüssig mit mindestens einem Isolationselement (34), insbesondere in radialer Richtung der elektrischen Maschine verliersicher, befestigt ist.

## Claims

1. A sensor fastening device for temperature measurement in an electrical machine for driving a motor vehicle, having
a retaining body (16) for receiving a temperature sensor (12),
a support body (20) for bearing against a stator lamination (22) of the electrical machine, wherein the support body (20) is connected to the retaining body (16) in an expandable manner, in particular in a substantially articulated manner, and
an expansion means (36) for expanding the retaining body (16) away from the support body (20)
**characterised in that**
the retaining body (16) and the support body (20) are connected to one another via a central connecting piece (18), wherein the central connecting piece (18) has an opening (32) for introducing the expansion means (36).

2. The sensor fastening device according to claim 1, wherein the retaining body (16) and the support body (20) are produced in one piece from a bendable plastic material.

3. The sensor fastening device according to claim 1 or 2, wherein a receiving gap (24) for receiving the expansion means (36) is formed between the retaining body (16) and the support body (20), wherein the receiving gap (24), in particular, is formed substantially conically at least in one portion.

4. The sensor fastening device according to any one of claims 1 to 3, wherein the expansion means (36) is designed as a plug that can be inserted between the retaining body (16) and the support body (20), wherein the plug, in particular, has barbs (40) that can be expanded by screwing in a plug screw.

5. The sensor fastening device according to any one of claims 1 to 4, wherein retaining recesses for receiving expandable barbs (40) of the expansion means (36) in a form-fitting manner are formed between the retaining body (16) and the support body (20) and/or can be produced by a pressing of the barbs (40).

6. The sensor fastening device according to any one of claims 1 to 5, wherein the support body (20) has at least one limit stop (28) for radially abutting an insulating element (34) provided between a winding (14) and a stator lamination (22) and/or at least one retaining clip (30) for radially engaging behind the insulating element (34).

7. The sensor fastening device according to any one of claims 1 to 6, wherein the expansion means (36) has a projecting removal arm for pulling the expansion means (36) out of the receiving gap (24) formed between the retaining body (16) and the support body (20).

8. A stator assembly for an electrical machine having at least one stator lamination (22), a winding (14) for forming an electromagnet, insulating elements (34) provided between the stator lamination (22) and the winding (14) and arranged spaced apart from one another circumferentially for electrically insulating the winding (14) with respect to the stator lamination (22), and a sensor fastening device (10) according to any one of claims 1 to 7 which is clamped between the stator lamination (22) and the winding (14), wherein the temperature sensor (12) received in the retaining body (16) extends substantially radially between two insulating elements (34) following one another in the circumferential direction and is pressed in a thermally conductive manner against the winding (14), in particular a radially inner edge of the winding (14), by the expansion means (36).

9. The stator assembly according to claim 8, wherein the sensor fastening device (10) is fastened in a form-fitting manner to at least one insulating element (34), in particular captively in a radial direction of the electrical machine.

## Revendications

1. Dispositif de fixation de capteur destiné à la mesure de température dans une machine électrique pour l'entraînement un véhicule à moteur, comportant
un corps de retenue (16) destiné à recevoir un capteur de température (12),
un corps d'appui (20) destiné à être posé sur une tôle de stator (22) de la machine électrique,
dans lequel le corps d'appui (20) est relié au corps de retenue (16) de manière à permettre un écartement, en particulier de façon sensiblement articulée, et
un moyen d'écartement (36) destiné à écarter le corps de retenue (16) du corps d'appui (20)
**caractérisé en ce que**
le corps de retenue (16) et le corps d'appui (20) sont reliés entre eux par une entretoise centrale (18), l'entretoise centrale (18) présentant une ouverture (32) destinée à insérer le moyen d'écartement (36).

2. Dispositif de fixation de capteur selon la revendication 1, dans lequel le corps de retenue (16) et le corps d'appui (20) sont fabriqués d'une seule pièce à partir d'un matériau plastique flexible.

3. Dispositif de fixation de capteur selon la revendication 1 ou 2, dans lequel une fente de réception (24) destinée à recevoir le moyen d'écartement (36) est réalisée entre le corps de retenue (16) et le corps d'appui (20), dans lequel en particulier la fente de réception (24) est réalisée de façon sensiblement conique au moins dans une zone partielle.

4. Dispositif de fixation de capteur selon l'une des revendications 1 à 3, dans lequel le moyen d'écartement (36) est conçu comme une cheville enfichable qui peut être insérée entre le corps de retenue (16) et le corps d'appui (20), en particulier la cheville enfichable présentant des ergots (40) qui peuvent être écartés en vissant une vis à cheville.

5. Dispositif de fixation de capteur selon l'une des revendications 1 à 4, dans lequel des cavités de retenue, destinées à recevoir par complémentarité de forme des ergots (40) pouvant être écartés du moyen d'écartement (36), sont réalisées entre le corps de retenue (16) et le corps d'appui (20) et/ou peuvent être produites en pressant les ergots (40) ensemble.

6. Dispositif de fixation de capteur selon l'une des revendications 1 à 5, dans lequel le corps d'appui (20) présente au moins une butée de limitation (28) destinée à buter radialement contre un élément isolant (34) prévu entre un enroulement (14) et une tôle de stator (22) et/ou au moins un clip de fixation (30) destiné à saisir radialement par l'arrière l'élément isolant (34).

7. Dispositif de fixation de capteur selon l'une des revendications 1 à 6, dans lequel le moyen d'écartement (36) présente un bras de démontage saillant destiné à sortir par traction le moyen d'écartement (36) hors de la fente de réception (24) réalisée entre le corps de retenue (16) et le corps d'appui (20).

8. Ensemble stator pour une machine électrique comportant au moins une tôle de stator (22), un enroulement (14) pour la réalisation d'un électroaimant, des éléments isolants (34) prévus entre la tôle de stator (22) et l'enroulement (14) et agencés à distance les uns des autres dans la direction circonférentielle destinés à isoler électriquement l'enroulement (14) par rapport à la tôle de stator (22) et un dispositif de fixation de capteur (10) selon l'une des revendications 1 à 7 bloqué entre la tôle de stator (22) et l'enroulement (14), dans lequel le capteur de température (12) reçu dans le corps de retenue (16) s'étend essentiellement radialement entre deux éléments isolants (34) qui se suivent dans la direction circonférentielle et est pressé par conduction thermique par le moyen d'écartement (36) contre l'enroulement (14), en particulier un bord radialement interne de l'enroulement (14).

9. Ensemble stator selon la revendication 8, dans lequel le dispositif de fixation de capteur (10) est fixé par complémentarité de forme à au moins un élément isolant (34), en particulier de manière à éviter les pertes dans la direction radiale de la machine électrique.
